# EUROPEAN PATENT SPECIFICATION

(11) **EP 2 695 256 B1**
(45) Date of publication and mention of the grant of the patent: **15.07.2015**
(21) Application number: 12714929.2
(22) Date of filing: 27.02.2012
(51) Int. Cl.: H02H 3/20, H01T 1/12, H01T 4/06, H01T 1/14

(54) **THE SURGE ARRESTER WITH A REPLACEABLE OVERVOLTAGE PROTECTION MODULE**
ÜBERSPANNUNGSABLEITER MIT EINEM AUSWECHSELBAREN ÜBERSPANNUNGSSCHUTZMODUL
LIMITEUR DE SURTENSION DOTÉ D'UN MODULE DE PROTECTION CONTRE LES SURTENSIONS REMPLAÇABLE

(30) Priority: 01.04.2011 CZ 20110183
(43) Date of publication of application: 12.02.2014
(73) Proprietor: SALTEK s.r.o., 40007 Usti nad Labem (CZ)
(72) Inventor: SUCHY, Jaromír, 403 40 Ústí na Labem-Skorotice (CZ)
(74) Representative: Kratochvil, Vaclav
(86) International application number: PCT/CZ2012/000017
(87) International publication number: WO 2012/130192

(56) References cited:
- EP-A1- 1 587 188
- DE-C1- 10 001 667
- US-A1- 2010 293 991

## Description

### TECHNICAL FIELD

The invention refers to a surge arrester with a replaceable overvoltage protection module either in a single-pole or a multi-pole configuration, to be connected to the protected distribution system, which comprises an overvoltage protection base, into which one or more replaceable overvoltage protection modules are plugged in and which also comprise plug contacts, a coding field and thermal disconnector for one or more protection elements, which disconnects protection elements of the surge arrester from the protected distribution system if overvoltage occurs.

### BACKGROUND OF THE INVENTION

Modem surge arrester constructions are designed to facilitate easy replacement of the surge arrester if the protection element is damaged without having to disconnect the supply conductors, through which the surge arresters are connected to the distribution system. Known solutions use protection elements located in a replaceable overvoltage protection module comprising plug contacts for connection with the overvoltage protection base. The overvoltage protection base, usually U-shaped in a single-pole or multi-pole configuration, is adjusted to allow one or more replaceable overvoltage protection modules to be inserted into it and contains contact sockets, terminal clamps and screws to connect the conductors of the distribution system. The plug contacts of the replaceable module and those of the contact sockets shall be capable of carry high pulse and short-circuit currents without any damage being caused. The design of the construction is very difficult to resolve, due to extreme stress on this contact system caused by electromagnetic forces and generated heat. The design of the surge arresters with a replaceable overvoltage protection module must prevent plugging the replaceable overvoltage protection module with protection elements into the incorrect supply voltage.

An example of such a surge arrester arrangement is shown in document EP 1587188 "Überspannungsschutzgerät". This is a surge arrester for the protection of electrical low-voltage systems, which consists of an overvoltage protection base with terminal clamps for phase conductors and earth resp. neutral conductors and at least one replaceable overvoltage protection module with at least one protection element embedded in the case housing, with the overvoltage protection base having at least one remote signal contact with a switch signalling the status of at least one replaceable overvoltage protection module. The overvoltage protection base comprises V-shape contact sockets connected with the terminal clamps and the replaceable overvoltage protection module features matching flat plug contacts, so consequently, the replaceable overvoltage protection module can be inserted to the overvoltage protection base, whereas the replaceable overvoltage protection module comprises an optical status indicator. The optical status indicator and the remote signal contact switch can be controlled using a common mechanical control system. The solution described in this document prevents the insertion of an incorrect replaceable overvoltage protection module using a coding element in the overvoltage protection base and a complementary anti-coding element in the replaceable overvoltage protection module. The disadvantage of this solution is that it has a restricted number of coding options and there is a potential of damage using a bigger force.

The known solution under EP 1900072 "A plug-in surge arrester with one or more overvoltage protection elements" describes a surge arrester design with one or more plug-in overvoltage protection elements, whereas the contact of the plug-in element with the base is solved using a U-shape contact mate part, which consists of shaped flexible elements to generate pressure onto the plug contacting surfaces. This solution does not work without this component.

Document US 7,806,716 "Plug-In Combination of Appliances for Protecting Against Overvoltages" describes a solution using a "tear"-shaped coding pin on a replaceable module and a coding hole with a complementary shape in the base. The axis of the coding pin and the coding hole must be matching, otherwise the replaceable module will not plug into the base. By turning the position of the coding pin and the coding hole, usually by 60 degrees, it is possible to programme various options for different types of protection elements or voltage. Due to restricted space the coding pin has a small cross section, hence its low robustness, as a result of which it breaks off easily and the incorrect type of replaceable module can be plugged into the base. The number of coding options is also restricted to six here.

Designs of thermal disconnectors used in practice frequently use tin solder as a thermally sensitive sensor with suitable additives regulating the softening temperature. The individual parts of the thermal disconnector, the specific design of which depends on the size of the pulse current maximum amplitude of the surge arrester, are usually connected using temperature adequate tin solder. A spring action is used to disconnect or separate these.

The solution known from document DE 10 2006 038 005 "Anschluss- und Basisteil zur Aufnahme eines steckbaren Überspannungsableiters" uses a suitably-shaped copper strip as one part of the thermal disconnector of the protection element, usually a varistor. The copper strip is fixed to a flat contact of the protection element via a spot weld on one side providing electrical conductivity at the same time, and on its opposite side, using soldering of suitable temperature solder, it is connected to the projection of a metallic electrode which, at the same time, is soldered to the protection element. A compressive spring acts on the shaped, copper strip using a lever swivelable about the axis. If a defect of the protection element occurs, the protection element heats up, the parts of the thermal disconnector heat up simultaneously, the solder becomes soft, resulting in the loss of rigidity of the soldered connection. By the action of the spring and the swivelable lever, the shaped copper strip starts moving in a circular trajectory, which is defined by its length and free space in the housing, the free end separates from the projection of the metallic electrode, resulting in disconnecting from the distribution system. The swivelable lever is also used to signal the defect of the protection elements visually and their disconnecting from the distribution system, i.e. the loss of functionality of the surge arrester. The disadvantage of this solution is that the spatial arrangement makes it impossible to separate both parts of the thermal disconnector sufficiently, thus limiting the application of this solution to higher operating voltages. In some circumstances the disconnect speed is not sufficient and an arch can develop on the thermal disconnector during the disconnection.

### SUMARY OF THE INVENTION

The said deficiencies are considerably eliminated using a surge arrester according to claim 1, with a replaceable overvoltage protection module in a single-pole or a multi-pole configuration, comprising an overvoltage protection base and a replaceable overvoltage protection module, subject to this invention, wherein a U-shaped overvoltage protection base is adjusted for inserting one, three or four replaceable overvoltage protection modules, where the replaceable overvoltage protection module, comprising a visual status signalling window of the thermal disconnector via a flexible visual signalling strip, features C-shaped plug contacts on the opposite lateral sides, and on one or both lateral sides it features a coding field consisting of rectangular projections and/or indentations of a different profile, width and length, which slide in the complementary indentations and/or projections on one or both internal lateral sides of the overvoltage protection base; the replaceable overvoltage protection module also comprises at least two guide pins at the bottom part of the overvoltage protection base, guide holes situated opposite these in the overvoltage protection base, U-shape contact sockets located opposite the plug contacts in the overvoltage protection base, and, at the same time, the replaceable overvoltage protection module features a thermal disconnector situated on the fixing case of the replaceable overvoltage protection module housing comprising a connecting part of the plug contact, a slider, with at least one thrust element on its rear face, and on its front side it leans against the sliding interconnection of the thermal disconnector, where the sliding interconnection is fixed to the centring pin of the slider, and the sliding interconnection of the thermal disconnector is situated between the connecting part of the plug contact and the projection of the connecting element of the thermal disconriector, and at the same time, at least one protection element featuring a connecting element of the protection element from the opposite side links to the connecting element of the thermal disconnector, or if two or more protection elements are used in an advantageous flat arrangement one above other and situated between the connecting element of the thermal disconnector and the connecting element of the protection elements, and the opposite lateral sides of these protection elements are provided with a pair of electrically conductive interconnections.

The coding field on the replaceable overvoltage protection module, consisting of a group of projections and/or rectangular indentations of a different profile, width and length, which slide in the complementary indentations and/or projections on the overvoltage protection base, increases the number of applicable coding field options, as a result of which a larger number of replaceable overvoltage protection module types are covered. Additionally, even if huge force were applied, an incorrect replaceable overvoltage protection module cannot be inserted in the overvoltage protection base, which is particularly important for prevention of inserting the replaceable overvoltage protection module with protection elements in lower voltage than the voltage in the distribution system, which in extreme circumstances could cause seasoning, fire or an explosion with devastating effects on the surge arrester and its environment, or injury to the operator handling the replaceable overvoltage protection module. The advantageous configuration of the surge arrester with a replaceable overvoltage protection module is characterised in that the projections and indentations of the coding field have a rectangular and/or square shape and/or circular segment.

This arrangement allows for the extension of the number of applicable coding field options.

The implementation of a surge arrester with a replaceable overvoltage protection module brings an advantage of the guide pins and the guide holes having a circular cross section.

The cross section of the guide pins and guide holes can be square, rectangular or triangular, for example, however, the circular cross section is the most advantageous, taking into account manufacturing and handling the replaceable overvoltage protection module while being inserted in the overvoltage protection base. The guide pins situated on the bottom side of the replaceable overvoltage protection module are cylindrical and slide in the guide holes in the overvoltage protection base in such a manner that once they have been inserted, they guide the replaceable overvoltage protection module into the exact position against the overvoltage protection base.

Another advantage of the surge arrester with a replaceable overvoltage protection module is that the thrust element consists of a pre-pressed compressive spring.

This design ensures the correct functioning of the thermal disconnected.

For the correct functioning of the surge arrester with a replaceable overvoltage protection module it is an advantage that the contact socket features at least one connecting clamp with at least one screw.

The terminal clamps with screws facilitate the connection of the supply conductors of the distribution system to the overvoltage protection base containing contact sockets.

Another advantage of the surge arrester with a replaceable overvoltage protection module is that the plug contact features a connecting part of the plug contact, situated on the side wall of the upper half of the plug contact case housing and it is connected with it via an oblique segment so that the surfaces of the plug contact and the connecting part of the plug contact lie in different parallel planes.

This design arrangement facilitates contact connection of the plug contact with the sliding interconnection of the thermal disconnector.

For the correct functioning of the surge arrester with a replaceable overvoltage protection module it is also advantageous that the plug contact features a contacting part of the plug contact with at least one cog on the bottom side of the lower half of the plug contact case housing and two symmetrically situated thrust elements of the plug contact on the top face, of which each thrust element features at least one cog and the contacting part of the plug contact forms an angle from 0 to 10 degrees with the thrust element of the plug contact.

In this invention the contact socket does not need to comprise an inserted shaped flexible element to exert pressure on the plug contact as used in the known solutions. Due to the acting of electromagnetic force at the current pulse flowing, the contacting part of the plug contact with the thrust element of the plug contact repel each other, resp. they push each other away, by which they exert dynamic pressure on the contact socket. The higher the pulse current, the greater the thrust force, which is one of the advantages of this invention.

### BRIEF DESCRIPTION OF THE DRAWINGS

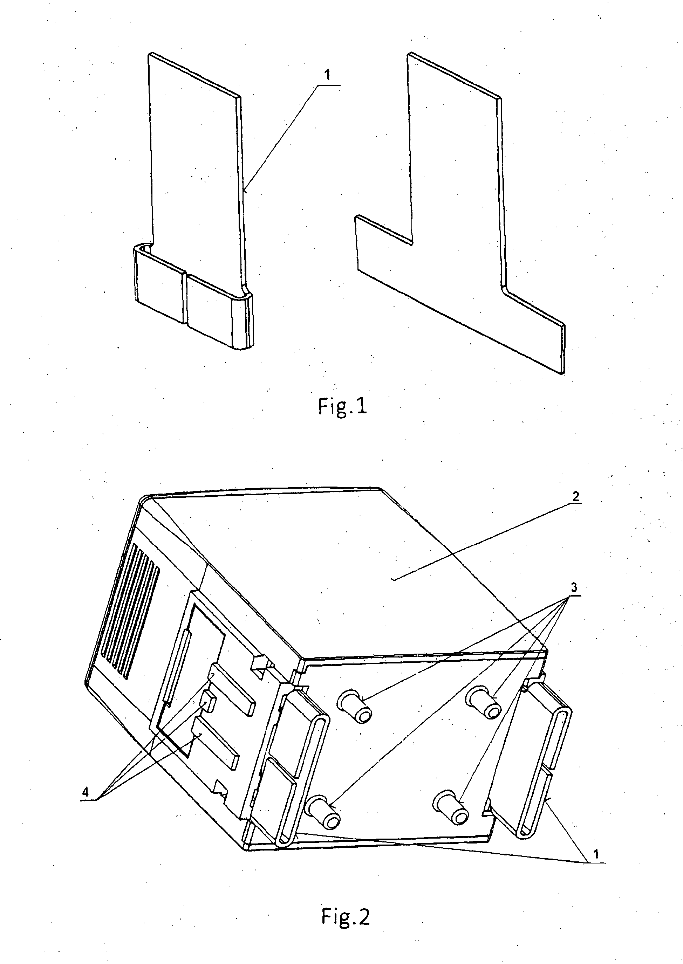

The invention will be explained in detail using the drawings, in which Fig. 1 shows the plug contact in its basic arrangement on the left and in the unfolded status on the right.
Fig. 2 shows a replaceable overvoltage protection module with two plug contacts, four guide pins and a coding field with three projections.
Fig. 3 shows the overvoltage protection base in a single-pole configuration with two contact sockets and four guide holes.
Fig. 4 shows the replaceable overvoltage protection module in its slide out position against the contact sockets on the left, in the plugged-in position on the right, where each contact socket is provided with two terminal clamps and two screws.
Fig. 5 shows the set of the thermal disconnector with the fixing case of the replaceable overvoltage protection module housing, a slider, sliding interconnection of the thermal disconnector, centring pin, connecting part of the plug contact and the projection of the thermal disconnector connecting element.
Fig. 6 shows the interior of the thermal disconnector with two thrust elements, sliding interconnection of the thermal disconnector, connecting part of the plug contact and the projection of the thermal disconnector connecting element.
Fig. 7 shows a detailed side view of the thermal disconnector with the connecting part of the plug contact, sliding interconnection of the thermal disconnector, connecting element of the thermal disconnector comprising the projection, and five protection elements and two electrically conductive interconnections.
Fig. 8 shows a detailed side view of the connecting part of the protection elements to connect the plug contact with the connecting element of the protection elements featuring two electrically conductive interconnections.
Fig. 9 shows the replaceable overvoltage protection module with the visual status signalling window of the thermal disconnector.
Fig. 10 shows the internal arrangement of the replaceable overvoltage protection module with the flexible strip of the visual status signalling of the thermal disconnector and the slider of the thermal disconnector.
Fig. 11 shows the surge arrester in a single-pole configuration consisting of the overvoltage protection base and one inserted replaceable overvoltage protection module.
Fig. 12 shows the surge arrester in a single-pole configuration consisting of the overvoltage protection base with one slided out replaceable overvoltage protection module.
Fig. 13 shows the surge arrester in a three-pole configuration consisting of the overvoltage protection base with three inserted replaceable overvoltage protection modules.
Fig. 14 shows the surge arrester in a three-pole configuration consisting of the overvoltage protection base with three slided out replaceable overvoltage protection modules.
Fig. 15 shows the surge arrester in a four-pole arrangement consisting of the overvoltage protection base with four inserted replaceable overvoltage protection modules.
Fig. 16 shows the surge arrester in a four-pole arrangement consisting of the overvoltage protection base with four slided out replaceable overvoltage protection modules.
Fig. 17 shows the view from above of the advantageous plug contact configuration comprising the plug contact connecting part, plug contact contacting part, two thrust elements of the plug contact and four cogs.
Fig. 18 shows the bottom view of the advantageous plug contact configuration comprising the plug contact connecting part, plug contact contacting part, two plug contact thrust elements and four cogs.

### EXAMPLES OF THE INVENTION

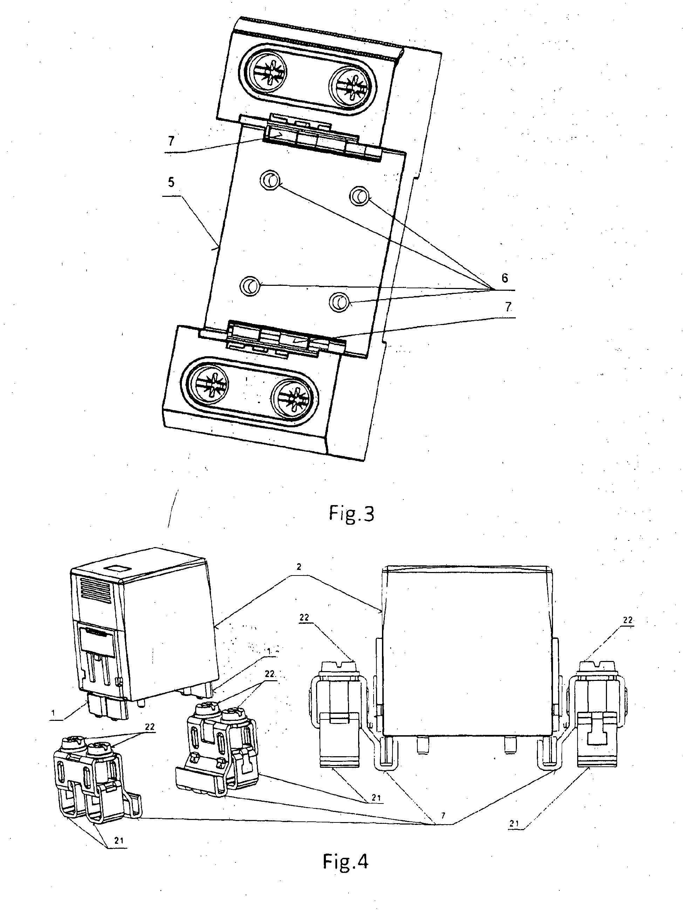

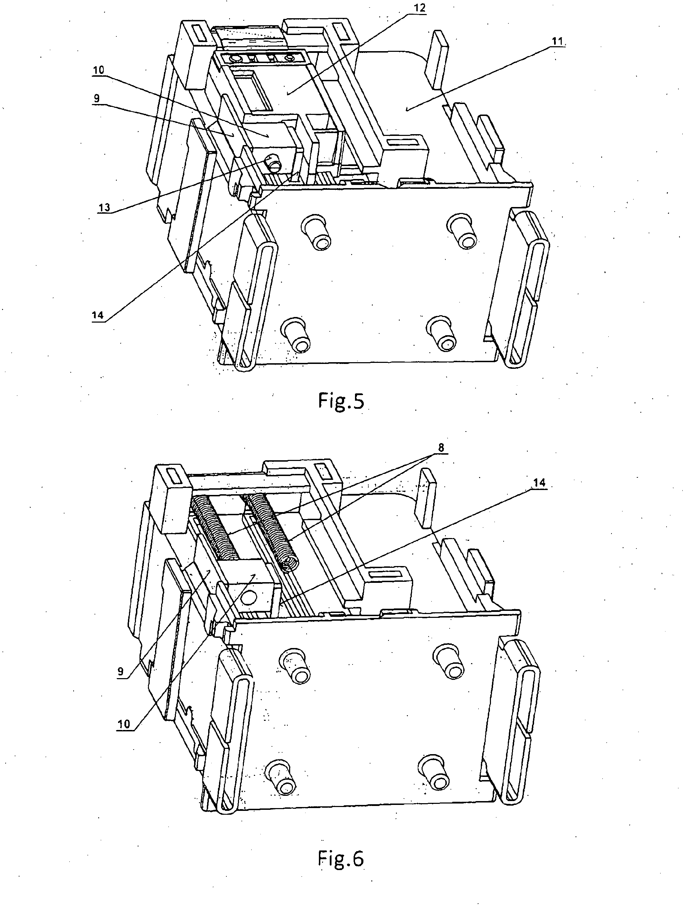

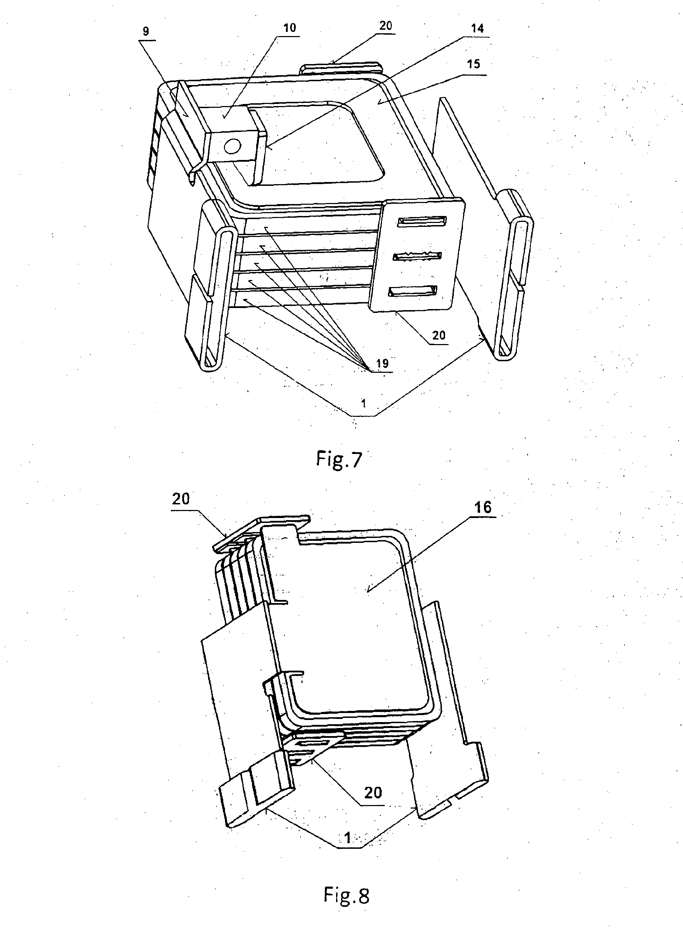

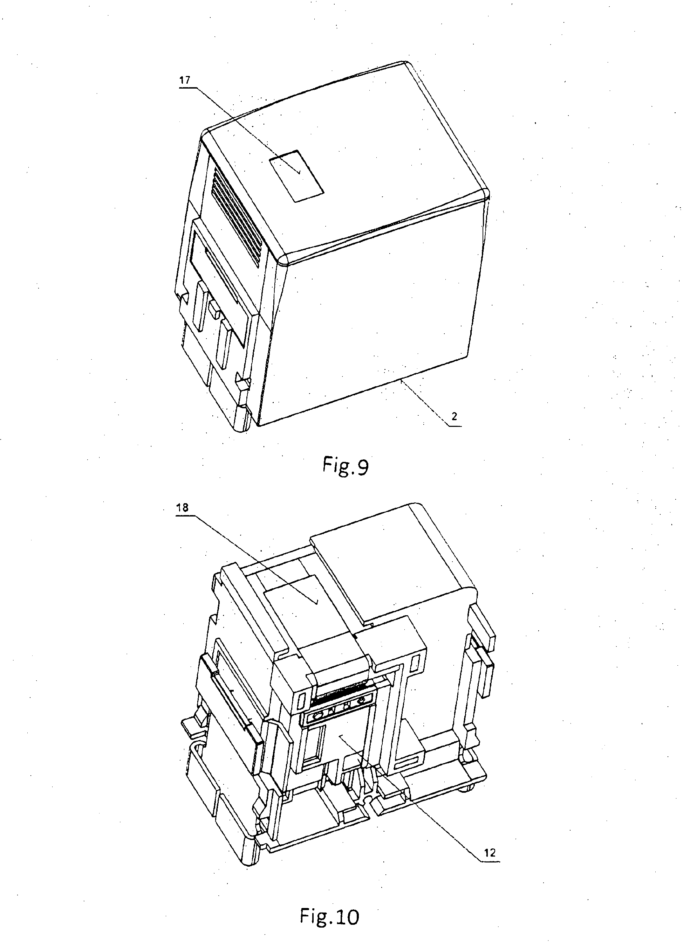

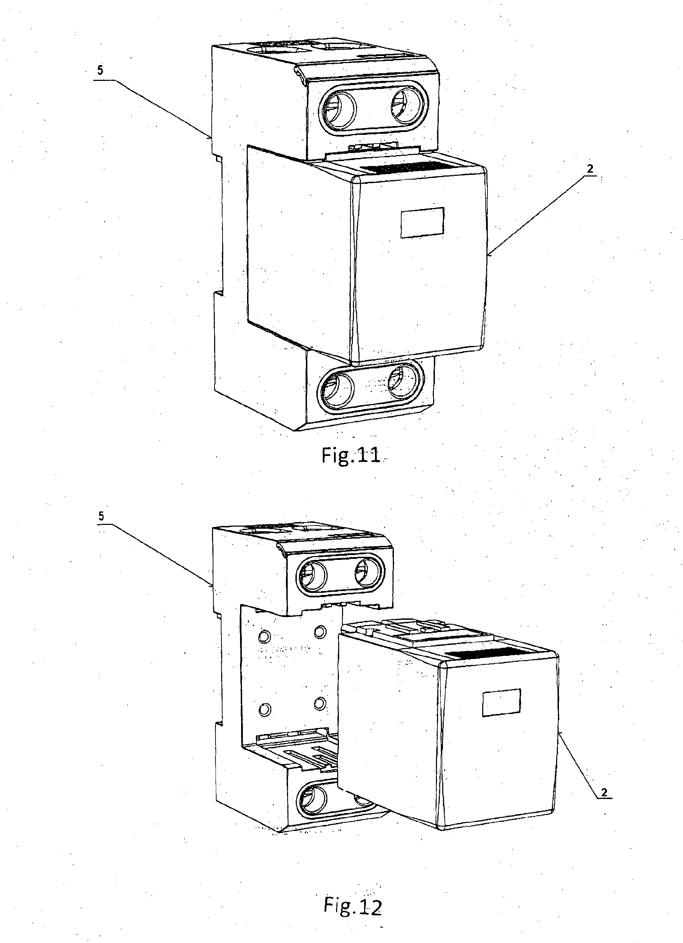

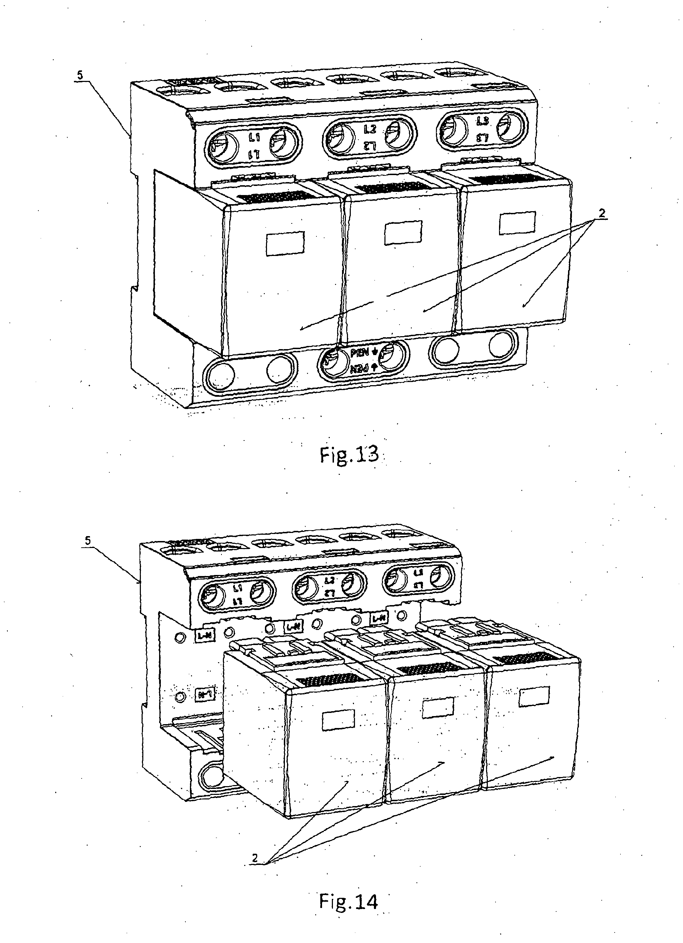

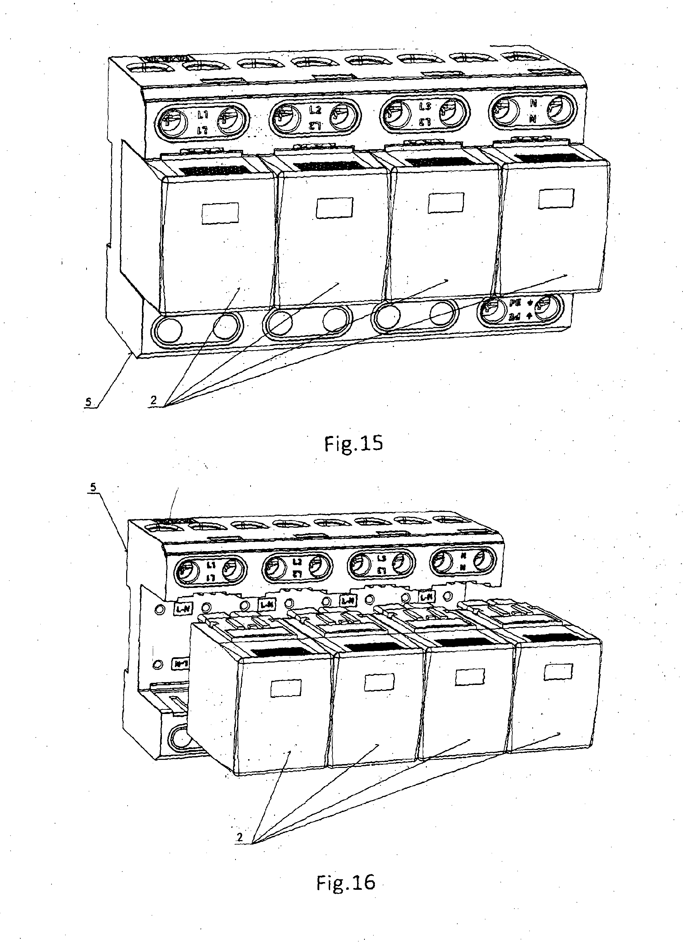

The surge arrester with a replaceable overvoltage protection module in a single-pole or a multi-pole configuration shown in Fig. 3 consists of an overvoltage protection base 5 and as shown in Fig. 2 of an overvoltage protection replaceable module 2. The U-shaped overvoltage protection base 5 is designed as shown in Figs. 11 and 12 for inserting one, or as shown in Figs. 13 and 14 three, or as shown in Figs. 15 and 16 four overvoltage protection replaceable modules 2 in it. As shown in Fig 9, the overvoltage protection replaceable module 2 features a visual status signalling window 17 of the thermal disconnector implemented according to Fig. 10 via a visual signalling flexible strip 18. The overvoltage protection replaceable module 2 according to Fig. 2 features C-shaped plug contacts 1 on the opposite lateral sides as shown in Fig. 1 and a coding field 4, on both lateral sides, comprising rectangular projections and/or indentations of a different profile, width and length, which slide in the complementary indentations and/or projections on both internal lateral sides of the overvoltage protection base 5 according to Fig. 3. The overvoltage protection replaceable module 2 according to the illustration in Fig. 2 features four guide pins 3 on the bottom part, and the overvoltage protection base 5 according to the illustration in Fig. 3 features guide holes 6 opposite these, and opposite the plug contacts 1 in the overvoltage protection base 5 there are U-shaped contact sockets 7 as shown in Fig. 4. The overvoltage protection replaceable module 2 subject to Figs. 5 and 6 comprises a thermal disconnector located on the fixing case 11 of the overvoltage protection replaceable module 2 housing consisting of the connecting part 9 of the plug contact 1, a slider 12, featuring two thrust elements 8 on its rear face, and on its front side leaning against the sliding interconnection 10 of the thermal disconnector, fixed to the centring pin 13 of the slider 12, where the sliding interconnection 10 of the thermal disconnector is situated as shown in Fig. 7 between the connecting part 9 of the plug contact 1 and the projection 14 of the connecting part 15 of the thermal disconnector. Where according to Fig. 7 to the connecting element 15 of the thermal disconnector link five protection elements 19 in flat configuration arranged one above other between the connecting element 15 of the thermal disconnector and the connecting element 16 of the protection elements 19 according to Fig. 8. The opposite lateral sides of these protection elements 19 comprise two electrically conductive interconnections 20. If only one protection element 19, comprising a connecting element 16 of the protection element 19 from the opposite side, links to the connecting element 15 of the thermal disconnector, the electrically conductive interconnections 20 are not used.

The thermal-disconnector disconnects one or more protection elements 19, usually varistors, from the protected distribution system, should these be overloaded or damaged. The connecting part 9 of the plug contact 1, the sliding interconnection 10 of the thermal disconnector and the projection 14 of the connecting part 15 of the thermal disconnector are fixed together using tin solder with a low softening point, and an electrically conductive soldered connection. The sliding interconnection 10 of the thermal disconnector is located in its basic position as shown in Figs. 5, 6 and 7. If overvoltage occurs, the protection element 19 starts heating up and consequently, other parts of the thermal disconnector heat up, too, once the temperature of the solder softening is exceeded, the joint becomes loose and the slider 12 and the sliding interconnection 10 of the thermal disconnector move to the second extreme position due to the action of the thrust element 8, resulting in disconnecting the electrical conductive connection between the connecting part 9 of the plug contact 1 and the projection 14 of the thermal disconnector connecting part 15. By this the protection element 19 disconnects from the protected distribution system.

The slider 12 according to Fig. 5 comprises a centring pin 13 to guide the sliding interconnection 10 of the thermal disconnector and to facilitate the assembly. The slider 12 is mechanically connected via the visual signalling flexible strip 18, as shown in Fig. 10. By changing the position of the slider 12, the visual signalling flexible strip 18 also moves outside the visual signalling window 17 as shown in Fig. 9, as a result of which the colour in the visual signalling window 17 changes, since the visual signalling flexible strip 18 has a different colour than the fixing case 11 of the overvoltage protection replaceable module 2 housing, situated underneath.

In the advantageous configuration the projections and indentations of the coding field 4 have a rectangular and/orsquare profile and/or circular segment.

Fig. 2 shows the overvoltage protection replaceable module 2 with the coding field 4 featuring three rectangular projections; Fig. 3 shows the overvoltage protection base 5 featuring three complementary rectangular indentations. Consequently, only the overvoltage protection replaceable module 2 with the matching projections can be inserted in the overvoltage protection base 5. The information of the coding field 4 is defined by the width and length of the projection, its profile, number of projections in the coding field 4 and the gap width between the projections. On the overvoltage protection replaceable module 2 the coding field 4 can comprise a combination of projections and indentations, where the projection on the overvoltage protection replaceable module 2 complements the indentation in the overvoltage protection base 5 and conversely.

In the advantageous configuration the guide pins 3 and guide holes 6 have a circular cross section.

This arrangement is shown in Fig. 2, where on the bottom side of the overvoltage protection replaceable module 2 four cyliridrical guide pins 3 are located symmetrically along the centre, provided with a conical termination, allowing the pins to be inserted into the complementary guide holes 6 in the overvoltage protection base 5, where the holes extend conically, as shown in Fig. 3. This guides the overvoltage protection replaceable module 2 in inserting it into the exact position against the overvoltage protection base 5.

The thrust element 8 consists of a pre-pressed compressive spring in the advantageous model.

Fig. 6 shows two thrust elements 8 via pre-pressed compressive springs.

The advantageous model shown in Fig. 4 shows contact sockets 7 always with two terminal clamps 21 with two screws 22.

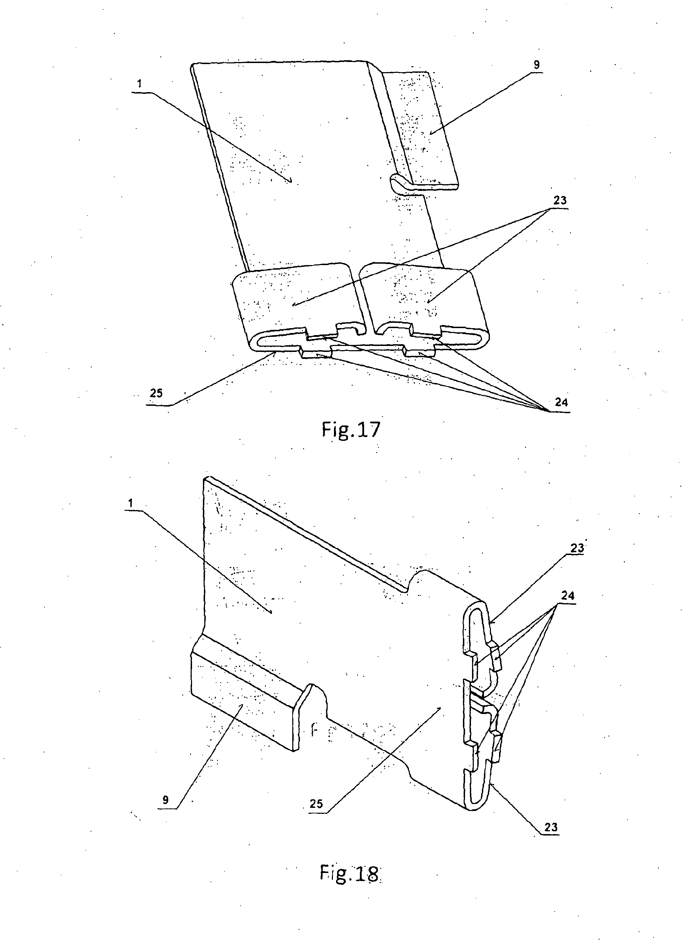

This arrangement offers the possibility of connecting one or two conductors of the protected distribution system to each contact socket 7 as required. In the advantageous model according to the illustrations in Figs. 17 and 18 the plug contact 1 comprises a plug contact 1 connecting part 9, situated on the side of the top half of the plug contact 1 case and linked to it via an oblique segment so that the surfaces of the plug contact 1 and the plug contact 1 connecting part 9 lie in different parallel planes.

Figs. 5, 6 and 7 show that such an arrangement deals with the contact connection of the plug contact 1 with the sliding interconnection 10 of the thermal disconnector.

In the advantageous model shown in Figs. 17 and 18, on the bottom side of the lower half of the plug contact 1 case, the plug contact 1 comprises a contacting part 25 of the plug contact 1 with two cogs 24 located symmetrically and on the top face, two thrust elements 23 of the plug contact 1 located symmetrically, each with one cog 24, where the contacting part 25 of the plug contact 1 forms an angle from 0 to 10 degrees with the thrust element 23 of the plug contact 1.

The cogs 24 enable to the plug contact 1, comprising a flexible metallic strip to be guided into the contact socket 7.

### INDUSTRIAL UTILIZATION

The surge arrester with a replaceable overvoltage protection module in a single-pole or a multi-pole configuration subject to this invention is a product that can be used in any situation where overvoltage adversely affects the distribution system. The plug contacts of the replaceable overvoltage protection module and the contact sockets in the overvoltage protection base have been designed to be capable of carry high pulse and short-circuit currents without damage. The coding field on the replaceable overvoltage protection module and its counter element in the overvoltage protection base prevent plugging the replaceable overvoltage protection module with protection elements into an incorrect supply voltage. The thermal disconnector disconnects protection components from the protected distribution system if these are overloaded and damaged and consequently, reduces the risk of property loss and operator injuries.

## Claims

1. The surge arrester with a replaceable overvoltage protection module in a single-pole or a multi-pole configuration, consisting of an overvoltage protection base (5) and an replaceable overvoltage protection module (2), the U-shaped overvoltage protection base (5) is adjusted for inserting one or three or four replaceable overvoltage protection modules (2), where the replaceable overvoltage protection module (2), featuring a visual status signalling window (17) of the thermal disconnector implemented via a visual signalling flexible strip (18), comprise a coding field (4), **is characterised in that** said replaceable overvoltage protection module (2) comprises C-shaped plug contacts (1) on the opposite lateral sides and a coding field (4), on one or both lateral sides, comprising rectangular projections and/or indentations of a different profile, width and length, which slide in the complementary indentations and/or projections on one or both internal lateral sides of the overvoltage protection base (5), additionally, the replaceable overvoltage protection module (2) also comprises at least two guide pins (3) in its bottom part, whereas in the opposite positions the overvoltage protection base (5) comprises guide holes (6) and in the positions opposite to the plug contacts (1) the overvoltage protection base (5) comprises U-shaped contact sockets (7), and, at the same time, the replaceable overvoltage protection module (2) comprises a thermal disconnector located on the fixing case (11) of the replaceable overvoltage protection module (2) housing and consisting of the connecting part (9) of the plug contact (1), a slider (12), on the rear side featuring at least one thrust element (8), on its front side leaning against the sliding interconnection (10) of the thermal disconnector, fixed on the centring pin (13) of the slider (12), where the sliding interconnection (10) of the thermal disconnector is situated between the connecting part (9) of the plug contact (1) and the projection (14) of the connecting part (15) of the thermal disconnector, where at the same time, at least one protection element (19) comprising a connecting element (16) of the protection element (19) from the opposite side links to the connecting element (15) of the thermal disconnector, or if two or more protection elements (19) are used, with the advantage in flat configuration arranged one above other between the connecting element (15) of the thermal disconnector and the connecting element (16) of the protection elements (19), the opposite lateral sides of these protection elements (19) comprise two electrically conductive interconnections (20).

2. The surge arrester with a replaceable overvoltage protection module as claimed in claim 1, **is characterised in that** the projections and indentations of the coding field (4) have a rectangular and/or square profile and/or circular segment.

3. The surge arrester with a replaceable overvoltage protection module as claimed in claims 1 and 2, **is characterised in that** the guide pins (3) and guide holes (6) have a circular cross section.

4. The surge arrester with a replaceable overvoltage protection module as claimed in claims, 1 2 and 3, **is characterised in that** the thrust element (8) comprises a pre-pressed compressive spring.

5. The surge arrester with a replaceable overvoltage protection module as claimed in claims 1 to 4, **is characterised in that** the contact socket (7) comprises at least one connecting clamp (21) with at least one screw (22).

6. The surge arrester with a replaceable overvoltage protection module as claimed in claims 1 to 5, **is characterised in that** the plug contact (1) comprises a connecting part (9) of the plug contact (1), situated on the side of the upper half of the plug contact (1) case and links to it via an oblique segment so that the surfaces of the plug contact (1) and the connecting part (9) of the plug contact (1) lie in different parallel planes.

7. The surge arrester with a replaceable overvoltage protection module as claimed in claims 1 to 6, **is characterised in that** the plug contact (1) comprises a contacting part (25) of the plug contact (1) with at least one cog (24) on the bottom side of the bottom half of the plug contact (1) case and on the top face, two thrust elements (23) of the plug contact (1) located symmetrically, of which each comprises at least one cog (24), where the contacting part (25) of the plug contact (1) forms an angle from 0 to 10 degrees with the thrust element (23) of the plug contact (1).

## Patentansprüche

1. Der Überspannungsableiter mit dem Überspannungsschutz-Austauschmodul in der einpoligen oder mehrpoligen Ausführung, bestehend aus dem Fundament (5) des Überspannungsschutzes und aus dem Austauschmodul (2) des Überspannungsschutzes, **kennzeichnet sich dadurch,** dass das Fundament (5) des Überspannungsschutzes in der Form des Buchstabens U zum Einstecken eines oder zwei oder vier Austauschmodule (2) des Überspannungsschutzes angepasst ist, womit der Austauschmodul (2) des Überspannungsschutzes, ausgerüstet mit der Durchsichtscheibe (17) der visuellen Signalisierung des Standes des thermischen Temperatur-Trennschalters, der durch das flexible Band (18) der visuellen Signalisierung abgewickelt wird, auf den gegenliegenden Seiten mit den Steckkontakten (1) in der Form des Buchstabens C und auf einer oder beiden Flanken mit dem Kodierungsfeld (4) ausgerüstet ist, das mit den Vorsprüngen und/oder Einschnitten mit der rechteckigen Form und mit den verschiedenen Profilen, verschiedenen Breiten und Längen gebildet ist, die in die Vorsprünge und/oder Einschnitte auf einer oder beiden inneren Flanken des Fundaments (5) des Überspannungsschutzes einrasten, weiter ist der Austauschmodul (2) des Überspannungsschutzes im unteren Teil mindestens mit zwei Zuführstiften (3) ausgestattet, womit in dem Fundament (5) des Überspannungsschutzes in den gegenliegenden Lagen die Zuführöffnungen (6) aufgelegt sind und in den gegenüber den Steckkontakte (1) gegenliegenden Lagen in dem Fundament (5) des Überspannungsschutzes die Kontaktsteckdosen (7) in der Form des Buchstabens U aufgelegt sind, und gleichzeitig ist der Austauschmodul (2) des Überspannungsschutzes mit dem thermischen Temperatur-Trennschalter ausgerüstet, der am Befestigungskörper (11) der Buchse des Austauschmoduls (2) des Überspannungsschutzes angeordnet ist und der besteht aus dem Anschlussteil (9) des Steckkontaktes (1), aus dem Schiebreiter (12), der auf der Rückseite mindestens mit einem Druckelement (8) ausgerüstet ist und auf der Vorderseite mit dem beweglichen Verbindungsstück (10) des thermischen Temperatur-Trennschalters gestützt ist, das an dem Zentrierstift (13) des Schiebreiters (12) eingesteckt ist, womit das Verbindungsstück (10) des thermischen Temperatur-Trennschalters zwischen dem Anschlussteil (9) des Steckkontaktes (1) und dem Vorsprung (14) des Anschlussteils (15) des thermischen Temperatur-Trennschalters angeordnet ist, wobei an dem Anschlussteil (15) des thermischen Temperatur-Trennschalters mindestens ein Schutzelement (19) angeschlossen wird, das aus der gegenliegenden Seite mit dem Anschlussteil (16) der Schutzelemente (19) ausgestattet ist, oder bei der Anwendung von zwei und mehreren Schutzelementen (19) mit dem Vorteil in der flachen Ausführung zwischen dem Anschlussteil (15) des thermischen Temperatur-Trennschalters und dem Anschlussteil (16) der Schutzelemente (19) übereinander angeordnet, sind die gegenliegenden Flanken dieser Schutzelemente (19) mit zwei elektrisch leitfähigen Verbindungsstücken (20) ausgerüstet.

2. Der Überspannungsableiter mit dem Überspannungsschutz-Austauschmodul nach dem Anspruch 1, **kennzeichnet sich dadurch,** dass die Vorsprünge und/oder Einschnitte des Kodierungsfeldes (4) ein rechteckiges Profil und/oder quadratisches Profil und/oder Rundprofil haben.

3. Der Überspannungsableiter mit dem Überspannungsschutz-Austauschmodul nach dem Anspruch 1 oder 2, **kennzeichnet sich dadurch,** dass die Zuführstifte (3) und Zuführöffnungen (6) ein Rundprofil haben.

4. Der Überspannungsableiter mit dem Überspannungsschutz-Austauschmodul nach dem Anspruch 1 oder 2 oder 3, **kennzeichnet sich dadurch,** dass das Druckelement (8) mit der vorgespannten Druckfeder gebildet ist.

5. Der Überspannungsableiter mit dem Überspannungsschutz-Austauschmodul nach dem Anspruch 1 bis 4, **kennzeichnet sich dadurch,** dass die Kontaktsteckdose (7) mit mindestens einer Anschlussklemme (21) und einer Schraube (22) versehen sind.

6. Der Überspannungsableiter mit dem Überspannungsschutz-Austauschmodul nach dem Anspruch 1 bis 5, **kennzeichnet sich dadurch,** dass der Steckkontakt (1) mit dem Anschlussteil (9) des Steckkontaktes (1) ausgestattet ist, der an der Flanke der oberen Hälfte des Körpers des Steckkontaktes (1) positioniert ist und der mit diesem Steckkontakt durch schrägen Abschnitt verbunden ist, so dass die Flächen des Steckkontakts (1) und des Anschlussteils (9) des Steckkontakts (1) in verschiedenen parallelen Ebenen liegen.

7. Der Überspannungsableiter mit dem Überspannungsschutz-Austauschmodul nach dem Anspruch 1 bis 6, **kennzeichnet sich dadurch,** dass der Steckkontakt (1) auf der unteren Seite der unteren Hälfte des Steckkontakt-Körpers (1) mit dem Kontaktteil (25) des Steckkontakts (1) mit mindestens einem Zahn (24) und auf der oberen Seite mit zwei symmetrisch positionierten Andruckteilen (23) des Steckkontakts (1) versehen ist, wobei beide Andruckteile mit mindestens einem Zahn (24) bestückt sind, womit der Kontaktteil (25) des Steckkontakts (1) und der Andruckteil (23) des Steckkontakts (1) einen Winkel im Bereich von 0-10 Grad einschließen.

## Revendications

1. Le limiteur de surtension doté d'un module de protection contre les surtensions remplaçable ayant une configuration à un seul pôle ou à plusieurs pôles, qui se compose d'une base (5) de protection contre les surtensions et d'un module de protection contre les surtensions remplaçable (2), **caractérisé en ce que** la base (5) de protection contre les surtensions en forme de U est conçue pour l'installation d'un, trois ou quatre modules de protection contre les surtensions remplaçables (2), ledit module de protection contre les surtensions remplaçable (2), qui comporte une fenêtre de signalisation visuelle (17) de l'état du déconnecteur thermique effectuée par une bande souple de signalisation visuelle (18), comprend des contacts à fiche en forme de C (1) sur les côtés latéraux opposés et un champ de codage (4) comprenant des saillies et/ou des échancrures rectangulaires ayant un profil, une largeur et une longueur différents, qui glissent dans les échancrures et/ou saillies prévues à cet effet sur l'un ou les deux cotés internes de la base de protection contre les surtensions (5), le module de protection contre les surtensions remplaçable (2) comporte également au moins deux broches de guidage (3) dans la partie inférieure, les trous de guidage (6) étant situés dans les positions opposées dans la base de protection contre les surtensions (5) et les douilles de contact (7) en forme de U sont situées dans la base de protection contre les surtensions (5) dans les positions opposées aux contacts a fiche (1), et, en même temps, le module de protection contre les surtensions remplaçable (2) est équipé d'un déconnecteur thermique situé sur le corps de fixation (11) du boîtier du module de protection contre les surtensions remplaçable (2) et comprenant une partie de connexion (9) du contact à fiche (1), un curseur (12) muni, dans la partie arrière, au moins d'un élément de pression (8), appuyé, dans la partie avant, contre une interconnexion coulissante (10) du déconnecteur thermique montée sur l'ergot de centrage (13) du curseur (12), la dite interconnexion coulissant (10) du déconnecteur thermique est située entre la partie de connexion (9) du contact à fiche (1) et la saillie (14) de l'élément de connexion (15) du déconnecteur thermique, ledit élément de connexion (15) du déconnecteur thermique est lié au moins à un élément de protection (19) muni de l'autre côté d'un élément de connexion (16) de l'élément de protection (19), ou lorsque deux ou plusieurs éléments de protections (19) sont utilisés ayant l'avantage de configuration plate des éléments de protection (19) disposés l'un au-dessus de l'autre entre l'élément de connexion (15) du déconnecteur thermique et l'élément de connexion (16) des élément de protection (19), les parties latérales opposées de ces éléments de protection (19) sont munies de deux interconnexions électriquement conductrices (20).

2. Le limiteur de surtension doté d'un module de protection contre les surtensions remplaçable selon la revendication 1, **caractérisée en ce que** les saillies et les échancrures du champ de codage (4) ont un profil rectangulaire ou carré ou de segment de cercle.

3. Le limiteur de surtension doté d'un module de protection contre les surtensions remplaçable selon la revendication 1 ou 2, **caractérisée en ce que** les broches de guidage (3) et les trous de guidage (6) ont une section circulaire.

4. Le limiteur de surtension doté d'un module de protection contre les surtensions remplaçable selon la revendication 1 ou 2 ou 3, **caractérisée en ce que** l'élément de pression (8) est créé par un ressort de compression précomprimé.

5. Le limiteur de surtension doté d'un module de protection contre les surtensions remplaçable selon la revendication de 1 à 4, **caractérisée en ce que** la douille de contact (7) est munie au moins d'une borne de connexion (21) avec au moins une vis (22).

6. Le limiteur de surtension doté d'un module de protection contre les surtensions remplaçable selon la revendication de 1 à 5, **caractérisée en ce que** le contact à fiche (1) est muni d'une partie de connexion (9) du contact à fiche (1) située sur le côté de la moitié supérieure du corps du contact à fiche (1) et liée à lui par un segment oblique de façon que les surfaces du contact à fiche (1) et de la partie de connexion (9) du contact à fiche (1) soient disposées dans de différents plans parallèles.

7. Le limiteur de surtension doté d'un module de protection contre les surtensions remplaçable selon la revendication de 1 à 6, **caractérisée en ce que** le contact à fiche (1) est muni d'une partie de contact (25) du contact à fiche (1) avec au moins une dent (24) dans la partie inférieure de la moitié inférieure du corps du contact à fiche (1) et de deux éléments de pression (23) du contact à fiche (1) disposés symétriquement dans la partie supérieure dont chacun est muni au moins d'une dent (24), ladite partie de contact (25) du contact à fiche (1) forme un angle de 0 à 10 degrés avec l'élément de pression (23) du contact à fiche (1).
